# EUROPEAN PATENT APPLICATION

(11) **EP 2 725 844 A1**
(43) Date of publication of application: **30.04.2014**
(21) Application number: 12306316.6
(22) Date of filing: 24.10.2012
(51) Int. Cl.: H04W 24/10

(54) **Channel quality measurements in the presence of multiple base stations with different ABS patterns**

(71) Applicant: Alcatel Lucent, 75007 Paris (FR)
(72) Inventor: Stanze, Oliver, 70499 Stuttgart (DE); Weber, Andreas, 74251 Lehrensteinsfeld (DE)
(74) Representative: Kleinbub, Oliver

(57) **Abstract**

The invention concerns a method for scheduling or link adaptation of user terminals (UE1-UE6), wherein channel quality measurements of at least one user terminal (UE1-UE6) are performed in subframes based on a usage for transmission in at least two base stations (M1, M2), channel quality information is determined for the at least one user terminal (UE1-UE6) for subsets of subframes with an identical pattern for usage for transmission in said at least two base stations (M1, M2) based on said channel quality measurements, and scheduling or link adaptation of the user terminals (UE1-UE6) is performed based on said channel quality information, and a base station and a user terminal therefor.

## Description

### Field of the invention

The invention relates to a method for scheduling or link adaptation of user terminals, and a base station and a user terminal adapted to perform said method.

### Background

In heterogeneous network (HetNet) scenarios using standards like e.g. Third Generation Partnership Project Long Term Evolution (3GPP LTE) standard, so-called pico base stations with their pico cells are placed under the coverage of a so-called macro base station. A pico base station typically covers a small area e.g. in buildings, train stations or aircrafts or outside due to its lower power, whereas a macro base station covers a larger area than a pico base station, as e.g. an outdoor area. Pico base stations enable a densification of cellular wireless networks, by adding additional capacity to places where it is needed. In order to push more mobiles into a pico cell, a so called handover bias value is introduced that pushes user terminals served by a macro base station into the pico cell although the pico cell receive signal level is below the macro cell receive signal level. For these new pico cell border user terminals inter-cell interference coordination is required.

3GPP LTE Release 10 introduces so-called enhanced inter-cell interference-coordination (eICIC) for performance improvements in heterogeneous networks. eICIC is a time domain ICIC concept based on subframe blanking. Thereby macro enhanced NodeBs (eNBs), i.e. macro base stations, send a pattern of so-called almost blank subframes (ABS), which only contains so-called pilots and common control information but no data. This results in a reduced interference in ABS for user terminals served by a pico base station. To enable the pico base station scheduler to exploit the varying interference situation in ABS and non-ABS, 3GPP Release 10 enables user terminals to provide up to two separate Channel Quality Indicator (CQI) values for separate subsets of subframes. Therefore the pico base station sends a CQI-Report Information Element (IE [1]) to each user terminal. The CQI-Report Information Element (IE) contains the so-called two bit string csi-MeasSubframeSet1-r10, which is in the following called subframe set 1, and the so-called csi-MeasSubframeSet2-r10, which is in the following called subframe set 2. In case of an FDD system (FDD = Frequency Division Duplex), each of the subframe sets has a size of 40 subframes. Each of the subframe sets defines the subframes in a 40ms period which should be considered for the measurements of one of the two CQI values. To provide separate CQI values for ABS and non-ABS one of the subframe sets will contain all ABS and the other will contain all non-ABS.

### Summary

Neighboring macro base stations may apply different ABS, e.g. because the user terminal distribution between macro and pico user terminals might be different in both macro cell areas. The usage of different ABS patterns in neighboring macro cells leads to a problem regarding the validity of the CQI measurements reported by the user terminals served by the pico base station, due to varying interference situations in ABS and non-ABS.

The usage of different ABS patterns in neighboring macro cells has two different effects:
- Varying interference in non-ABS for user terminals served by a macro base station: E.g. if a macro base station A sends twice as much ABS as a macro base station B, there are subframes in which macro base station B sends non-ABS, i.e. sends data to the user terminals it is serving, while macro base station A sends ABS. This leads to a lower interference for user terminals served by the macro base station B. A scheduling of user terminals of the macro base station B based on corresponding CQI-measurements performed in ABS and non-ABS, respectively, of the at least one neighbor macro base station A has thus potential for improvement as, currently, a macro base station does not take into account the influence of ABS patterns of neighboring macro base stations.
- Varying interference in ABS and non-ABS for user terminals served by a pico base station: E.g. a first channel quality information is determined for subframes used as ABS in base station A and used as ABS in base station B, a second channel quality information is determined for subframes used as non-ABS in base station A and used as non-ABS in base station B, and a third channel quality information is determined for subframes used as ABS in base station A and used as non-ABS in base station B. In the embodiment, said first, second and third quality information are e.g. determined based on CQI-measurements performed by user terminals served by the pico base station. In an alternative of the embodiment, a further channel quality information is determined for subframes used with a first defined percentage as ABS in base station A and used with a second defined percentage as ABS in base station B

The object of the invention is thus to propose a method for scheduling and/or link adaptation of user terminals which addresses these two effects and which is based on a more accurate channel quality and which thus leads to an improved resource usage e.g. with an improved overall data throughput.

A basic idea of embodiments of the invention is to perform channel quality measurements based on a usage of subframes as ABS or non-ABS in at least two base stations in order to be able to take into account the interference influence of ABS and non-ABS in at least one neighbouring base station.

Then, a channel quality information is determined for subframes with an identical pattern for usage of ABS and non-ABS in the at least two base stations either directly from said channel quality measurements, or by deducing said channel quality information from said channel quality measurements e.g. by interpolation of said channel quality measurements.

Finally, a scheduling and/or link adaptation of user terminals is performed based on said channel quality information taking thus into account the interference influence of ABS and non-ABS in at least one neighboring base station.

The object is thus achieved by a method for scheduling or link adaptation of user terminals, wherein
- channel quality measurements of at least one user terminal are performed in subframes based on a usage for transmission in at least two base stations,
- channel quality information is determined for the at least one user terminal for subsets of subframes with an identical pattern for usage for transmission in said at least two base stations based on said channel quality measurements,
- and at least one of the group of scheduling and link adaptation of the user terminals is performed based on said channel quality information.

The object of the invention is furthermore achieved by a base station for scheduling or link adaptation of user terminals, wherein the base station is adapted to
- trigger channel quality measurements of at least one user terminal in subframes based on a usage for transmission in at least two base stations,
- determine channel quality information for the at least one user terminal for subsets of subframes with an identical pattern for usage for transmission in said at least two base stations based on said channel quality measurements,
- and perform at least one of the group of scheduling and link adaptation of the user terminals based on said channel quality information.

The object of the invention is furthermore achieved by a user terminal to perform measurements for scheduling or link adaptation of user terminals, wherein the user terminal is adapted to
- receive a trigger to perform channel quality measurements in subframes based on a usage for transmission in at least two base stations,
- perform said channel quality measurements in subframes based on said usage for transmission in the at least two base stations,
- and transmit results of said channel quality measurements in subframes based on said usage for transmission in the at least two base stations to at least one base station.

The invention is described in the following within the framework of 3GPP LTE, however as the invention is not restricted to 3GPP LTE, but can in principle be applied in other networks that need to schedule user terminals, like e.g. in WiMAX networks (WiMAX = Worldwide Interoperability for Microwave Access), in the following, instead of the term eNodeB used in LTE, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows two subframe sets for CQI measurements of user terminals regarding ABS and non-ABS of one macro base station.
Fig. 4 schematically shows a communication network in which the invention can be implemented comprising two neighbouring macro base stations and two pico base stations.
Fig. 5 schematically shows two subframe sets for CQI measurements of user terminals for a best and a worst interference situation regarding ABS and non-ABS of two macro base stations.

### Description of the embodiments

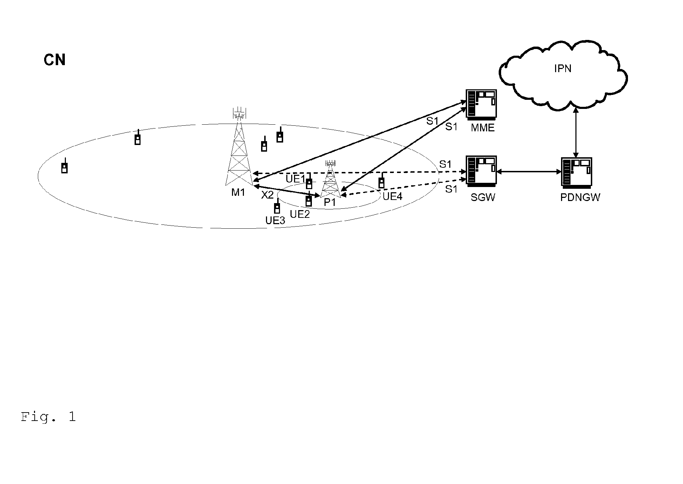

Fig. 1 shows as an example of a communication network in which the invention can be implemented a communication network CN according to the standard 3GPP LTE.

Said communication network CN comprises a macro base station M1, a pico base station P1, user terminals UE1-UE4, a serving gateway SGW, a packet data network gateway PDNGW, and a mobility management entity MME.

The user terminals UE1 and UE2 are connected via radio connections to the pico base station P1, and the user terminals UE3 and UE4 are connected via radio connections to the macro base stations M1. In future evolutions of LTE, each of the user terminals UE3 and UE4 could also be connected via radio connections to multiple macro base stations. The macro base station M1 is in turn connected to the serving gateway SGW and to the mobility management entity MME, i.e. to the evolved packet core (EPC), via the so-called S1 interface. In the same way, the pico base station P1 is connected to the serving gateway SGW and to the mobility management entity MME.

The macro base station M1 and the pico base station P1 are connected among each other via the so-called X2 interface. The macro base station M1 and the pico base station P1 can be connected among each other via radio connections or via fixed line connections.

The serving gateway SGW is connected to the packet data network gateway PDNGW, which is in turn connected to an external IP network IPN.

The S1 interface is a standardized interface between the macro base station M1 or the pico base station P1, i.e. an eNodeB in this example, and the Evolved Packet Core (EPC). The S1 interface has two flavours, S1-MME for exchange of signalling messages between one of the macro or pico base station M1, P1 and the mobility management entity MME and S1-U for the transport of user datagrams between one of the macro or pico base station M1, P1 and the serving gateway SGW.

The X2 interface is added in 3GPP LTE standard primarily in order to transfer the user plane signal and the control plane signal during handover.

The serving gateway SGW performs routing of the IP user data between the macro base station M1 and the pico base station P1 respectively, and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal UE1-UE4 and the respective serving macro base station M1 or pico base station P1.

The mobility management entity MME performs tasks of the subscriber management and the session management, and also performs the mobility management during handover between different access networks.

The pico base station P1 and the related coverage area of the pico cell is placed under the coverage area of the macro base station M1. Thus, the downlink transmission from the macro base station M1 is the dominating source of interference on the downlink transmission to the user terminals UE1 and UE2 served by the pico base station P1.

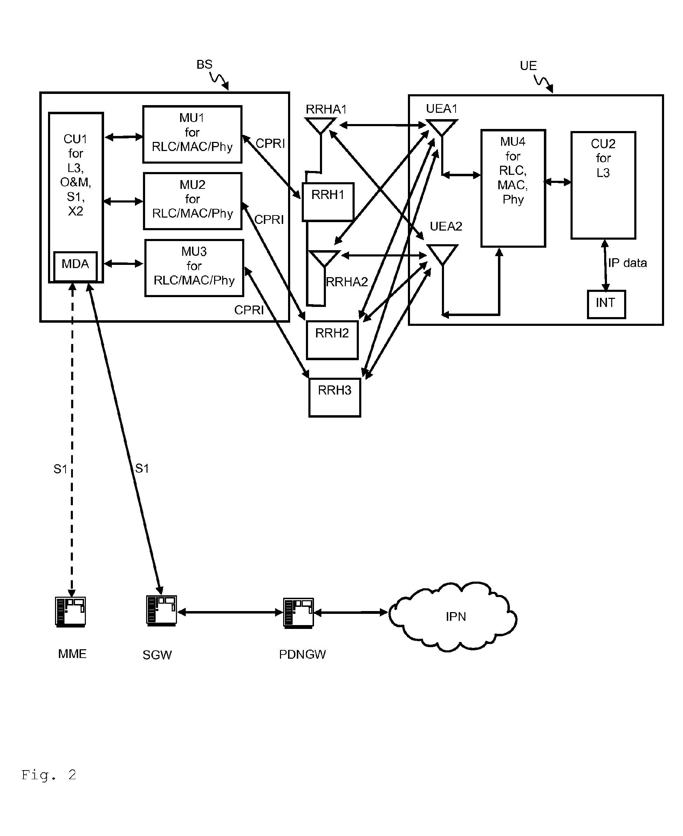

Fig. 2 schematically shows the structure of a user terminal UE and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and to a respective remote radio head RRH1, RRH2, or RRH3 via a so-called Common Public Radio Interface (CPRI).

Each of the remote radio heads RRH1, RRH2, and RRH3 is connected by way of example to two remote radio head antennas RRHA1 and RRHA2 for transmission and reception of data via a radio interface. Said two remote radio head antennas RRHA1 and RRHA2 are only depicted for the remote radio head RRH1 in fig. 2 for the sake of simplicity.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), micro processors, switches and memories, like e.g. Double Data Rate Synchronous Dynamic Random Access Memories (DDR-SDRAM) in order to be enabled to perform the tasks described below.

The remote radio heads RRH1, RRH2, and RRH3 comprise the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity to different media like e.g. fiber or electrical connection.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Automatic Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 over the Common Public Radio Interface to the respective remote radio head RRH1, RRH2, or RRH3, and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH1, RRH2, and RRH3 preferably via lossless fibre links that carry the CPRI data. This architecture reduces costs for service providers because only the remote radio heads RRH1, RRH2, and RRH3 containing the so-called radio equipment, like e.g. amplifiers, need to be situated in environmentally challenging locations. The base stations BS can be centrally located in less challenging locations where footprint, climate, and availability of power are more easily managed.

The user terminal antennas UEA1, UEA2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the MAC layer (MAC = Media Access Control) which is responsible for Hybrid Automatic Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

As already mentioned above, 3GPP LTE Release 10 introduces so-called enhanced inter-cell interference-coordination (eICIC) for performance improvements in heterogeneous networks, which is based on subframe blanking, i.e. macro base stations send a pattern of so-called almost blank subframes (ABS), which only contains so-called pilots and common control information but no data. This results in a reduced interference in ABS for user terminals served by a pico base station. To enable the pico base station scheduler to exploit the varying interference situation in ABS and non-ABS, 3GPP Release 10 enables user terminals to provide up to two separate Channel Quality Indicator (CQI) values for separate subsets of subframes. To provide separate CQI values for ABS and non-ABS one of the subframe sets will contain all ABS and the other will contain all non ABS.

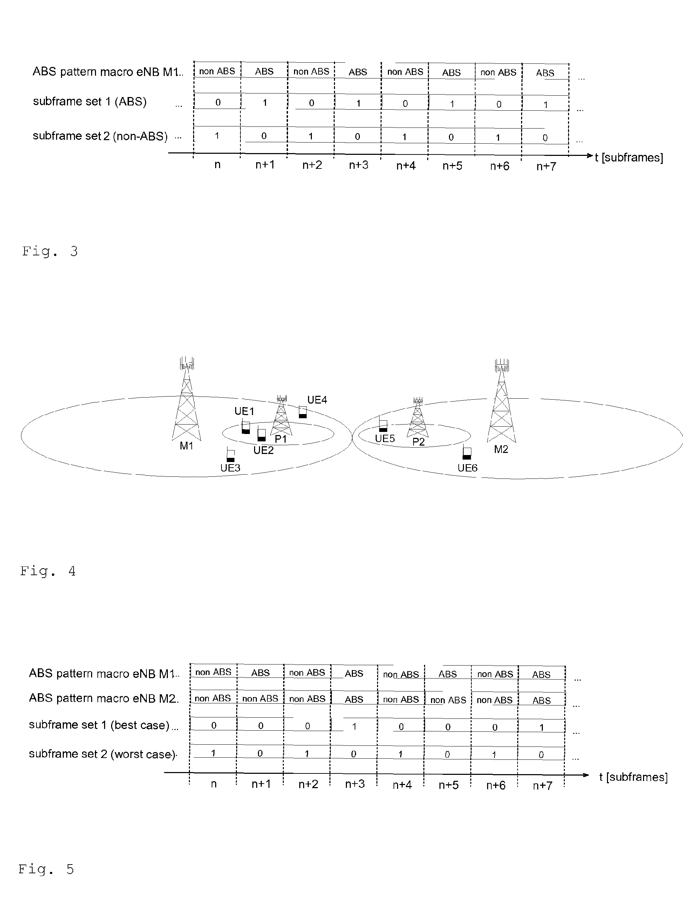

Fig. 3 schematically shows two of said subframe sets for CQI measurements of user terminals, as e.g. user terminals UE1 and UE2 depicted in fig. 1, regarding ABS and non-ABS of one macro base station, as e.g. macro base station M1 as depicted in fig. 1.

In the first row of fig. 3 an ABS and non-ABS pattern of 8 subframes n to n+7 is shown for a macro base station M1, as e.g. depicted in fig. 1. It can be seen that the sequence of non-ABS and ABS is alternating.

In the second row of fig. 3, a subframe set 1 for measurements of CQI values of ABS is shown. It can be seen that measurements are performed according to subframe set 1 in subframes n+1, n+3, n+5 and n+7, which is indicated by a "1" in the respective subframe.

In the third row of fig. 3, a subframe set 2 for measurements of CQI values of non-ABS is shown. It can be seen that measurements are performed according to subframe set 2 in subframes n, n+2, n+4 and n+6, which is indicated by a "1" in the respective subframe.

Thus, subframe set 1 contains all ABS and subframe set 2 all non ABS.

After performed measurements in ABS and non-ABS, the user terminals, as e.g. user terminals UE1 and UE2 depicted in fig. 1, provide channel quality information for subframe set 1, i.e. for ABS, and for subframe set 2, i.e. for non-ABS, to their serving pico base station, as e.g. pico base station P1 in fig. 1. Said channel quality information can e.g. comprise an average value or a median value for a channel quality of all measured subframes and possibly a volatility of the channel quality.

The pico base station can schedule user terminals based on the channel quality in subframe sets 1 and 2, e.g. the pico base station will schedule user terminals preferably to ABS if the difference in channel quality between subframe sets 1 and 2 is high.

3GPP LTE Release 10 enables a base station to inform other base stations about the ABS pattern it applies. Therefore a base station sends a message called "LOAD INFORMATION" which includes an ABS Information Element (IE) via the X2 interface to the other base stations. In general this mechanism is used by macro base stations, as e.g. macro base station M1 in fig. 1, to inform its pico base stations, as e.g. pico base station P1 in fig. 1, about the applied ABS pattern. The ABS pattern in a macro base station may be statically configured, e.g. by Operation and Maintenance (O&M), or it may be dynamically adapted by Self Optimized Network (SON) mechanisms. If the ABS pattern of a macro base station is changed, the macro base station will send a new ABS Information IE to the pico base stations.

Based on the received information about the ABS pattern of a macro base station, the pico base station can determine said subframe sets 1 and 2 described above.

A problem arises if neighboring macro cells use different ABS patterns, as will be described in the following.

The configuration of different ABS patterns in neighboring macro cells, even if said macro cells are partly synchronized, i.e. ABS are at same positions, as e.g. shown in fig. 5 and described below, results in a varying interference situation in ABS and non-ABS for pico cells and the neighboring macro cells. E.g. if a neighboring macro cell sends a lower number of ABS than the own macro cell, there will be a varying interference situation in ABS. E.g. pico base station P1 as depicted in fig. 4 and described below, will suffer from interference of macro base station M2 in every second ABS, e.g. subframes n+1 and n+5 as depicted in fig. 5. In all other ABS, e.g. subframes n+3 and n+7 as depicted in fig. 5, will not suffer from interference of macro base station M2 because macro base station M2 is also sending ABS. The problem now is that the reported CQI for ABS will most likely be affected by this varying interference situation in ABS and might, depending on the ABS patterns in the neighboring cells, either be too optimistic or too pessimistic for a certain subframe.

If the problem is ignored, a scheduler of a pico base station or a macro base station will configure separate CQI feedbacks for ABS and non-ABS for user terminals. The reported CQI values will be used for scheduling and this will result in suboptimal system performance because the reported CQI feedbacks will be too optimistic or too pessimistic depending on the scheduled subframe.

The problem can be avoided if all macro base stations apply the same ABS pattern. In this case there will not be varying interference in ABS. However, as the situations in the macro cells are quite different, e.g. due to a different user or load distribution, a common ABS pattern is always a compromise and therefore will also lead to suboptimal system performance.

According to embodiments of the invention, subframe specific CQI information which reflect the varying interference situation in ABS and non-ABS in case of inhomogeneous ABS pattern in neighboring macro cells is provided to the scheduler of a pico base station or a macro base station. Thereby, the measurements of user terminals served by the pico base station or the macro base station are configured in a way that they provide CQI feedbacks for best interference situations, e.g. all macro base stations are sending ABS, and the worst interference situation, e.g. all macro base stations are sending non-ABS. Thus, the user terminals provide frequency selective CQI feedback for the best interference situation and the worst interference situation. In case of subframes with interference situation which are between these two extreme interference situations, e.g. some macro base stations are sending ABS, others non-ABS, a subframe specific and user terminal specific channel quality information is estimated on basis of the available CQI feedbacks for the best interference situation and the worst interference situation. To enable this, the pico base station or the macro base station requires information regarding the ABS patterns of all neighboring macro base stations.

Fig. 4 schematically shows a communication network comprising neighbouring macro cells in which the invention can be implemented.

Said communication network comprises a first and a second macro base station M1 and M2, a first and a second pico base station P1 and P2, and user terminals UE1-UE6.

The user terminals UE1 and UE2 are connected via radio connections to the first pico base station P1, and the user terminals UE3 and UE4 are connected via radio connections to the first macro base stations M1.

The user terminal UE5 is connected via radio connections to the second pico base station P2, and the user terminals UE6 is connected via radio connections to the second macro base stations M2.

The coverage area of the first pico base station P1 falls under the coverage area of the first macro base station M1, and the coverage area of the second pico base station P2 falls under the coverage area of the second macro base station M2.

Connections of the macro base stations M1 and M2 and the pico base stations P1 and P2 to the serving gateway SGW and to the mobility management entity MME, i.e. to the evolved packet core (EPC), are not depicted in fig. 4 for the sake of simplicity, but are performed in an analogue way as depicted in fig. 1 and described above.

The macro base stations M1 and M2 and the pico base stations P1 and P2 are connected among each other via the so-called X2 interface, which can be implemented via radio connections or via fixed line connections.

Fig. 5 schematically shows two subframe sets for CQI measurements of user terminals for a best and a worst interference situation regarding ABS and non-ABS of the two macro base stations M1 and M2 depicted in fig. 4.

According to the example depicted in fig. 5, while macro base station M1 sends an ABS in every second subframe, macro base station M2 restricts the sending of ABS to every fourth subframe.

In the first row of fig. 5 an ABS and non-ABS pattern of 8 subframes n to n+7 is shown for the macro base station M1. It can be seen that the sequence of non-ABS and ABS is alternating.

In the second row of fig. 5 an ABS and non-ABS pattern of 8 subframes n to n+7 is shown for the macro base station M2. It can be seen that only subframes n+3 and n+7 are ABS.

In the third row of fig. 5, a subframe set 1 for measurements of CQI values in subframes with a lowest interference is shown. It can be seen that measurements are performed according to subframe set 1 in subframes n+3 and n+7 which are ABS in both the first and the second macro base station M1 and M2, and which is indicated by a "1" in the respective subframe.

In the fourth row of fig. 5, a subframe set 2 for measurements of CQI values in subframes with a highest interference is shown. It can be seen that measurements are performed according to subframe set 2 in subframes n, n+2, n+4 and n+6 which are non-ABS in both the first and the second macro base station M1 and M2, and which is indicated by a "1" in the respective subframe.

Thus, subframe set 1 contains all subframes with ABS in the first and the second macro base station M1 and M2, and subframe set 2 contains all subframes with non-ABS in the first and the second macro base station M1 and M2.

After performed measurements in subframe sets 1 and 2, the user terminals, as e.g. user terminals UE1 and UE2 depicted in fig. 4, provide channel quality information for subframe set 1, i.e. for ABS, and for subframe set 2, i.e. for non-ABS, to their serving pico base station, as e.g. pico base station P1 in fig. 4. In a further embodiment of the invention, user terminals that perform said measurements in subframe sets 1 and 2 are served by a macro base station M1 or M2, as e.g. user terminals UE3, UE4, UE6 in fig. 4, and said user terminals UE3, UE4, UE6 provide channel quality information for subframe set 1, i.e. for ABS, and for subframe set 2, i.e. for non-ABS, to their respective serving macro base station M1 or M2 in fig. 4. Said channel quality information can e.g. comprise an average value or a median value for a channel quality of all measured subframes and possibly a volatility of the channel quality.

To enable the determination of the best and the worst interference situation, the pico base stations P1, P2 or the macro base stations M1, M2 depicted in fig. 4 require the ABS pattern of all neighboring macro base stations M1, M2. This can be realized, if the macro base stations M1, M2 send an ABS Information Element (IE) via X2 to all pico base stations P1, P2 and macro base stations M1, M2 in their neighborhood. If the ABS pattern of a macro base station M1, M2 changes, it will send a new ABS Information Element (IE) to the pico base stations P1, P2 and macro base stations M1, M2 in its neighborhood. The ABS patterns can either be statically configured e.g. by Operation and Maintenance (O&M), or dynamically adapted by a Self Optimized Network (SON) mechanism. Thereby it is assumed, that the selection of ABS patterns in neighboring macro cells is synchronized to a certain degree, e.g. preferred positions of the ABS are same positions, which can be seen in fig. 5 where the ABS are at same positions although the macro base station M2 has a lower ratio of ABS than the macro base station M1.

If the ABS patterns of the neighboring macro base stations M1, M2 are available, the pico base stations P1, P2 or the macro base stations M1, M2 can determine for the neighboring macro base stations M1, M2 a subframe set 1 for ABS and a subframe set 2 for non-ABS as depicted in fig. 5. The intersection of the subframe sets for ABS of all neighboring macro base stations M1, M2 form the subframe set 1 for the best interference situation, i.e. lowest interference, in which all macro base stations M1, M2 are sending ABS, and the intersection of the subframe sets for non-ABS of all neighboring macro base stations M1, M2 form the subframe set for the worst interference situation, i.e. highest interference, in which all macro base stations M1, M2 are sending non-ABS. Macro base stations which lead to constant interference, e.g. because they are sending non-ABS, are not considered. The determined subframe sets 1 and 2 as described above are then applied to configure the CQI measurement of the user terminals served by the corresponding pico base station P1, P2 or macro base station M1, M2.

As pico base station P1 and pico base station P2 depicted in fig. 4 consider the same set of macro base stations M1 and M2, the subframe sets 1 and 2 for best and worst interference situation will be the same. The determined subframe sets are different if the neighborhood of the pico base stations P1 and P2 is not symmetric.

For each subframe which is not comprised in subframe set 1 or subframe set 2, which are e.g. in fig. 5 the subframes n+1 and n+5, no valid channel quality information is available. If the reported CQIs for subframe set 1 or subframe set 2 are applied to said subframes n+1 and n+5, this will result in suboptimal system performance because these CQI are either too optimistic in case of a CQI for subframe set 1, or too pessimistic in case of a CQI for subframe set 2. Thus, fitting CQIs for said subframes n+1 and n+5 have to be derived from at least one of the reported CQIs for subframe set 1 or subframe set 2, e.g. by interpolation. In the example depicted in fig. 5, a single CQI has to be derived because subframes n+1 and n+5 reflect the same interference situation that macro base station M1 sends ABS and macro base station M2 sends non-ABS. If ABS patterns of more macro base stations are considered, multiple CQIs for different subframes might have to be derived reflecting different intermediate interference situations between the highest and the lowest interference situations.

The determination of a CQI for a certain user terminal for a certain subframe can be e.g. realized as follows:
1) The latest reported CQI for subframe set 2 CQI_{subframe set 2} and an offset for subframe set 2 offset_{subframe set 2} which is dependent on an amount of Hybrid Automatic Repeat Request (HARQ) ACK or NACK for data received from the respective user terminal on subframes of subframe set 2 are transferred to a Signal to Interference and Noise Ratio (SINR) for subframe set 2 SINR_{subframe set 2} according to the following formula: SINR_{subframe set 2} = CQItoSINR(CQI_{subframe set 2}) + offset_{subframe set 2} In this formula, CQItoSINR(CQI_{subframe set 2}) describes the mapping of the latest reported CQI for subframe set 2 CQI_{subframe set 2} to an SINR value e.g. by means of a mapping table. The offset value for subframe set 2 offset_{subframe set 2} is increased for every ACK, and is decreased for every NACK for data transmitted from the respective user terminal in a subframe of subframe set 2. E.g. for a 10% Block Error Rate (BLER), every ACK increases offset_{subframe set 2} by 1/9 dB, and every NACK decreases offset_{subframe set 2} by 1 dB. The starting value for offset_{subframe set 2} is preferably 0 dB.
2) A subframe specific expected Signal To Interference and Noise Ratio SINR_{Expected}(subframe) is calculated by adding a subframe specific SINR offset denoted offset(subframe) to the SINR for subframe set 2 denoted SINR_{subframe set 2} and determined as described above according to the following formula: SINR_{Expected}(subframe) = SINR_{subframe set 2} + offset (subframe) The offset value offset(subframe) for the respective subframe, as e.g. subframe n+1 or n+5 as depicted in fig. 5, is dynamically adapted, as it is increased for every ACK, and is decreased for every NACK for data transmitted from the respective user terminal in the respective subframe. Each successful transmission of the user terminal on the subframe will lead to an increase by 1/9 dB while an unsuccessful transmission leads to a decrease by 1 dB. This mechanism will adapt the value offset(subframe) until the desired HARQ working point of e.g. 10% BLER, which is default for reported LTE CQIs, for the corresponding subframe is reached. As mentioned above, the same CQI might be used for all subframes with the same interference situation. Therefore a single value for offset(subframe) might be maintained for multiple subframes. In the example depicted in fig. 5, offset(n+1) = offset(n+5). The starting value for offset(subframe) is preferably 0 dB. The described method is user terminal specific, so each user terminal will maintain separate values for offset (subframe) and offset_{subframe set 2}.
3) The subframe specific expected Signal To Interference and Noise Ratio SINR_{Expected}(subframe) is transferred into a subframe specific CQI_{Expected}(subframe) using e.g. a mapping table. Said CQI_{Expected}(subframe) will be applied for scheduling transmissions of the corresponding user terminal in the corresponding subframes, e.g. the pico or macro base station will schedule user terminals preferably to subframes with a relatively high CQI value. In other words, due to the CQI measurements in subframe sets 1 and 2 described above, the macro or pico base station scheduler can derive valid CQI information for the different interference situations due to ABS and non-ABS in neighboring macro base stations. Additionally the macro or pico base station scheduler knows the interference situation in upcoming ABS and non-ABS due to the exchange of the ABS patterns between the macro and pico base stations as described above. Said information enable the macro or pico base station to improve its scheduling decision, e.g. a macro base station might preferably schedule user terminals to non-ABS with reduced interference from neighboring base stations, which suffer from highest interference from the neighboring macro base stations, i.e. said user terminals are scheduled to non-ABS in which the neighboring base stations are sending ABS. In a further embodiment, a link adaptation is performed based on said information, e.g. a macro base station might decrease transmission power in uplink and/or downlink of user terminals in non-ABS with reduced interference from neighboring base stations, i.e. in non-ABS in which the neighboring base stations are sending ABS, or a macro base station might increase transmission power in uplink and/or downlink of user terminals in non-ABS with higher interference from neighboring base stations, i.e. in non-ABS in which the neighboring base stations are also sending non-ABS. Alternatively or additionally, said link adaptation is performed by adaptation of used modulation and coding schemes (MCS), i.e. a macro base station might use a less robust MCS in non-ABS with reduced interference from neighboring base stations, i.e. in non-ABS in which the neighboring base stations are sending ABS, or a macro base station might use a more robust MCS in non-ABS with higher interference from neighboring base stations, i.e. in non-ABS in which the neighboring base stations are also sending non-ABS. The determination of said user terminals suffering from highest interference from the neighboring macro base stations may be based on handover measurements. In a further embodiment, the scheduling concept described above is combined with a bias between macro cells. The additional system capacity due to the exploitation of the reduced interference in certain non-ABS is used to offload traffic from other macro cells. E.g. in the scenario shown in fig. 5, the macro base station M2 can increase its cell throughput by exploiting the reduced interference in the non-ABS n+1 and n+5, because it has configured a lower number of ABS than macro base station M1. Macro base station M2 may use the extra capacity to the appliance of this invention, to offload traffic from macro base station M1, which suffers from reduced capacity due to the high number of configured ABS. This can be realized by applying a handover bias from macro base station M1 towards macro base station M2, i.e. user terminals are associated to macro base station M2 if the received signal from macro base station M1 does not exceed the received signal from macro base station M2 by the bias. This concept is similar to the general cell range extension concept for pico cells, but here applied between two dedicated macro base stations. If this invention is applied, the user terminals which are affected by the bias will most likely be scheduled on the non-ABS of macro base station M2 with reduced interference from macro base station M1, i.e. when base station M1 sends ABS.

According to further embodiments of the invention, the determination of a CQI for a certain user terminal for a certain subframe can be e.g. realized directly by interpolation of CQI values for subframe set 1 and subframe set 2.

In the embodiments described above and depicted e.g. in figs. 4 and 5, the corresponding processing steps can be performed e.g. in the modem unit boards MU1-MU3 and the control unit board CU1 of the macro base station M1, M2 and the pico base station P1, P2, and in the modem unit board MU4 and the control unit board CU2 of the user terminals UE1-UE6 as depicted in fig. 2 and described above.

## Claims

1. A method for at least one of the group of scheduling and link adaptation of user terminals (UE1-UE6), wherein
• channel quality measurements of at least one user terminal (UE1-UE6) are performed in subframes based on a usage for transmission in at least two base stations (M1, M2),
• channel quality information is determined for the at least one user terminal (UE1-UE6) for subsets of subframes with an identical pattern for usage for transmission in said at least two base stations (M1, M2) based on said channel quality measurements,
• and at least one of the group of scheduling and link adaptation of the user terminals (UE1-UE6) is performed based on said channel quality information.

2. A method according to claim 1, wherein said channel quality measurements of the at least one user terminal (UE1-UE6) are performed in subframes with equal usage for transmission in said at least two base stations (M1, M2).

3. A method according to claim 2, wherein channel quality information for subframes with unequal usage for transmission in the at least two base stations (M1, M2) is determined for the at least one user terminal (UE1-UE6) based on said channel quality measurements in subframes with equal usage for transmission in the at least two base stations (M1, M2).

4. A method according to any of the preceding claims, wherein said at least two base stations (M1, M2) are at least two macro base stations, and said user terminals (UE3, UE4, UE6) are scheduled by one of said at least two macro base stations (M1, M2).

5. A method according to claim 4, wherein said at least two macro base stations (M1, M2) exchange information about the applied usage for transmission.

6. A method according to any of the claims 1-3, wherein said at least two base stations (M1, M2) are macro base stations, and said user terminals (UE1, UE2, UE5) are scheduled by a pico base station (P1, P2).

7. A method according to claim 6, wherein said at least two macro base stations (M1, M2) transmit information about the respective applied usage for transmission to the pico base station (P1, P2).

8. A method according to any of the preceding claims, wherein said usage for transmission is one of a group of almost blank subframes and non almost blank subframes.

9. A method according to claim 8, wherein said channel quality information for subframes with unequal usage for transmission in the at least two base stations (M1, M2) is determined by interpolation of channel quality measurements performed in subframes which are used as almost blank subframes in each of said at least two base stations (M1, M2) and which are used as non almost blank subframes in each of said at least two base stations (M1, M2).

10. A method according to claim 8, wherein said channel quality information for subframes with unequal usage for transmission in the at least two base stations (M1, M2) is determined based on a signal to interference and noise ratio in subframes with equal usage for transmission in said at least two base stations (M1, M2) and an offset value which is dependent on a block error rate in subframes with unequal usage for transmission in said at least two base stations (M1, M2).

11. A method according to claim 10, wherein said offset value is dynamically adapted dependent on a reception of an acknowledgement message or a negative acknowledgement message of a automatic repeat request process.

12. A base station (M1, M2, P1, P2) for at least one of the group of scheduling and link adaptation of user terminals (UE1-UE6), wherein the base station (M1, M2, P1, P2) is adapted to
• trigger channel quality measurements of at least one user terminal (UE1-UE6) in subframes based on a usage for transmission in at least two base stations (M1, M2),
• determine channel quality information for the at least one user terminal (UE1-UE6) for subsets of subframes with an identical pattern for usage for transmission in said at least two base stations (M1, M2) based on said channel quality measurements,
• and perform at least one of the group of scheduling and link adaptation of the user terminals (UE1-UE6) based on said channel quality information.

13. A user terminal (UE1-UE6) to perform measurements for at least one of the group of scheduling and link adaptation of user terminals (UE1-UE6), wherein the user terminal (UE1-UE6) is adapted to
• receive a trigger to perform channel quality measurements in subframes based on a usage for transmission in at least two base stations (M1, M2),
• perform said channel quality measurements in subframes based on said usage for transmission in the at least two base stations (M1, M2),
• and transmit results of said channel quality measurements in subframes based on said usage for transmission in the at least two base stations (M1, M2) to at least one base station (M1, M2, P1, P2).

14. A communication network for mobile communication comprising at least one base station (M1, M2, P1, P2) according to claim 12 and at least one user terminal (UE1-UE6) according to claim 13.
